# FASCICULE DE BREVET EUROPEEN

(11) **EP 1 759 107 B1**
(45) Date de publication et mention de la délivrance du brevet: **04.06.2008**
(21) Numéro de dépôt: 05778184.1
(22) Date de dépôt: 16.06.2005
(51) Int. Cl.: F02D 41/02

(54) **PROCEDE ET DISPOSITIF POUR GERER LE FONCTIONNEMENT D'UN PIEGE A OXYDES D'AZOTES, ET DIAGNOSTIQUER SON ETAT DE VIEILLISEMENT**
VERFAHREN UND VORRICHTUNG ZUR VERWALTUNG DES BETRIEBS EINER STICKOXIDFALLE UND DIAGNOSTIZIERUNG IHRES ALTERUNGSZUSTANDES
METHOD AND DEVICE FOR MANAGING THE OPERATION OF A NITROGEN OXIDE TRAP, AND DIAGNOSING ITS AGEING CONDITION

(30) Priorité: 17.06.2004 FR 0406601
(43) Date de publication de la demande: 07.03.2007
(73) Titulaire: RENAULT S.A.S., 92100 Boulogne Billancourt (FR)
(72) Inventeur: DIONNET, Bernard, F-91150 MORIGNY CHAMPIGNY (FR); GUENOUNOU, Karim, F-94100 SAINT MAUR (FR); GUYON, Marc, F-91290 LA NORVILLE (FR); LEPRIEUR, Laurent, F-91470 LIMOURS (FR); COCHET, Stéphane, F-45800 SAINT JEAN DE BRAYE (FR)
(86) Numéro de dépôt international: PCT/FR2005/050452
(87) Numéro de publication internationale: WO 2006/003341

(56) Documents cités:
- WO-A-98/55742
- DE-C- 19 844 082
- FR-A- 2 843 044

## Description

L'invention concerne un procédé et un dispositif pour gérer le fonctionnement d'un piège à oxydes d'azote, et pour diagnostiquer son état de vieillissement pour un moteur fonctionnant en mélange pauvre, c'est-à-dire dans des conditions d'excès d'oxygène par rapport au carburant.

Il est déjà connu de la demande de brevet FR 2,843,044 un procédé et un dispositif de gestion du fonctionnement d'un piège à oxydes d'azote pour de tels moteurs.

Le procédé selon ce document utilise une sonde à oxygène de type tout ou rien pour détecter la fin de l'activité de réduction des oxydes d'azote adsorbés sur un catalyseur de type piège à oxydes d'azote. Selon ce procédé, la détection de la fin de purge est effectuée à une température normale de fonctionnement du capteur de gaz, soit entre environ 650° et 800°C.

La détection de fin de purge dans ce document est effectuée grâce à la présence d'un second saut du signal électrique donné par la sonde à oxygène, disposée en aval du piège. Ce second saut est utilisé comme indicateur de la fin de purge.

La détection aisée du second saut selon le procédé de ce document présente l'inconvénient de pouvoir être malheureusement perturbée par différents paramètres.

Le premier d'entre eux est lié au contrôle, plus ou moins bien effectué, de la composition des gaz d'échappement en sortie du moteur, entraînant ainsi des fluctuations sur le signal de la sonde, et par conséquent de fausses détections de fin de purge.

Le second paramètre est lié à la durée de détection du premier plateau qui s'avère trop courte pour être toujours fiable.

Le dernier paramètre est lié à la nécessité d'avoir une amplitude du signal de la sonde suffisante pour permettre une détection correcte du second saut sur la courbe.

Enfin ce procédé antérieur présente l'inconvénient de ne pas permettre d'effectuer le diagnostic de l'état de vieillissement d'un piège à oxydes d'azote au cours de son utilisation.

Aussi il subsiste le besoin de pouvoir disposer d'un procédé pour gérer le fonctionnement d'un piège à oxydes d'azote, tout en pouvant diagnostiquer son état de vieillissement, et donc de fonctionnement pour un moteur à combustion interne fonctionnant en mélange pauvre.

L'invention a donc pour objet un procédé pour gérer le fonctionnement d'un piège à oxydes d'azote, et pour diagnostiquer son état de vieillissement pour un moteur à combustion interne fonctionnant en mélange pauvre, selon lequel on commande périodiquement une purge dudit piège à oxydes d'azote, consistant à disposer une première sonde à oxygène sur le conduit d'échappement en aval du piège à oxydes d'azote, et à observer l'évolution d'un signal significatif représentatif du signal fourni par cette sonde.

Ce procédé se caractérise en ce qu'une unique augmentation sensible de ce signal représentatif vers une valeur seuil S1 à compter du début de la purge du piège à oxydes d'azote, obtenue suite à une variation consécutive à un passage du moteur à un fonctionnement en mélange pauvre à un fonctionnement en mélange riche, est utilisée comme indicateur pour commander la fin de la purge, et en ce que l'intégration du signal significatif entre l'instant de début de purge et l'instant de fin de purge, puis, la comparaison de la valeur d'intégration à une valeur seuil S2, ou bien, la mesure du temps écoulé pour atteindre le seuil S1 par rapport à l'instant dd début de purge sont utilisées pour diagnostiquer son état de vieillissement.

Le procédé de l'invention présente l'avantage, lorsque le capteur de gaz (sonde lambda) fonctionne à basse température (400° à 500°C), de fiabiliser, à la fois, la détection de fin de purge et le diagnostic de l'état de vieillissement du piège à oxydes d'azote.

Lorsque le capteur de gaz (sonde lambda) fonctionne à basse température, le procédé de l'invention présente l'avantage de permettre une détection simple et robuste de la fin de purge du piège à oxydes d'azote.

Le procédé de l'invention dans lequel le diagnostic est réalisé à la température normale de fonctionnement du capteur de gaz, soit entre environ 650° et 800°C, présente l'avantage d'être plus rapide qu'à basse température. En effet, il n'y a pas de modification de l'équilibre thermique de la sonde. Ceci permet donc de faire le diagnostic dès la prise de décision.

L'invention a encore pour objet un dispositif de gestion du fonctionnement d'un piège à oxydes d'azote et de diagnostic de son état de vieillissement pour un moteur à combustion interne fonctionnant en mélange pauvre, pour la mise en oeuvre du procédé tel que défini précédemment, le moteur étant équipé d'une ligne d'échappement pourvus d'un piège à oxydes d'azote.

Ce dispositif se caractérise en ce qu'il comporte une sonde à oxygène placée sur la ligne d'échappement en aval du piège à oxydes d'azote, et des moyens de calcul pour déterminer l'unique augmentation sensible d'un signal significatif représentatif du signal fourni par ladite sonde à partir du début de la purge, ledit signal étant obtenu suite au déclenchement d'une opération de purge, pour s'en servir comme indicateur de fin de purge, et pour déterminer l'état de vieillissement du piège à oxydes d'azote.

De préférence, la gestion du fonctionnement du piège à oxydes d'azote peut être effectuée lorsque la sonde à oxygène lambda fonctionne à une température comprise entre 400° et 500°C.

De préférence, le diagnostic peut être effectué lorsque la sonde à oxygène lambda fonctionne à une température allant d'environ 400° à 500°C, ou bien d'environ 650° à 800°C.

De préférence, avant ou après l'observation de l'unique signal obtenu à une température d'environ 400°-500°C, un nouveau signal complémentaire peut être observé indépendamment du signal précédent.

Ce nouveau signal peut comprendre une nouvelle augmentation sensible formant un second plateau à partir d'un premier plateau de niveau sensiblement constant, obtenu suite à une variation consécutive à un passage du moteur d'un fonctionnement en mélange pauvre à un fonctionnement en mélange riche. Ce nouveau signal peut être utilisé comme indicateur complémentaire pour commander la fin de purge lorsque la sonde à oxygène lambda fonctionne à une température comprise entre environ 650° et 800°C.

Le diagnostic peut aussi être obtenu par la mesure du temps écoulé entre les premier et second plateaux pour préciser son état de vieillissement lorsque la sonde à oxygène lambda fonctionne à une température comprise entre environ 650° et 800°C.

De préférence, on peut utiliser en complément une seconde sonde à oxygène placée en amont du piège à oxydes d'azote, pour fournir un signal de référence par rapport auquel l'évolution du signal fourni par la première sonde est comparée pour fournir ledit signal significatif.

La ou les sondes à oxygènes peuvent être choisies parmi les sondes de type suivant : sonde à oxygène de type tout ou rien, sonde proportionnelle, capteur d'oxyde d'azote dont on utilise la fonction de mesure de la concentration en oxygène.

Les première et seconde sondes peuvent être de type différent ou identique.

Le dispositif peut comprendre une seconde sonde à oxygène placée en amont du piège à oxydes d'azote et reliée auxdits moyens de calculs pour leur fournir un signal de référence.

L'invention va maintenant être illustrée à l'aide des exemples de réalisation qui suivent, qui sont donnés à titre d'illustration et qui ne limitent en aucune manière l'objet de l'invention.

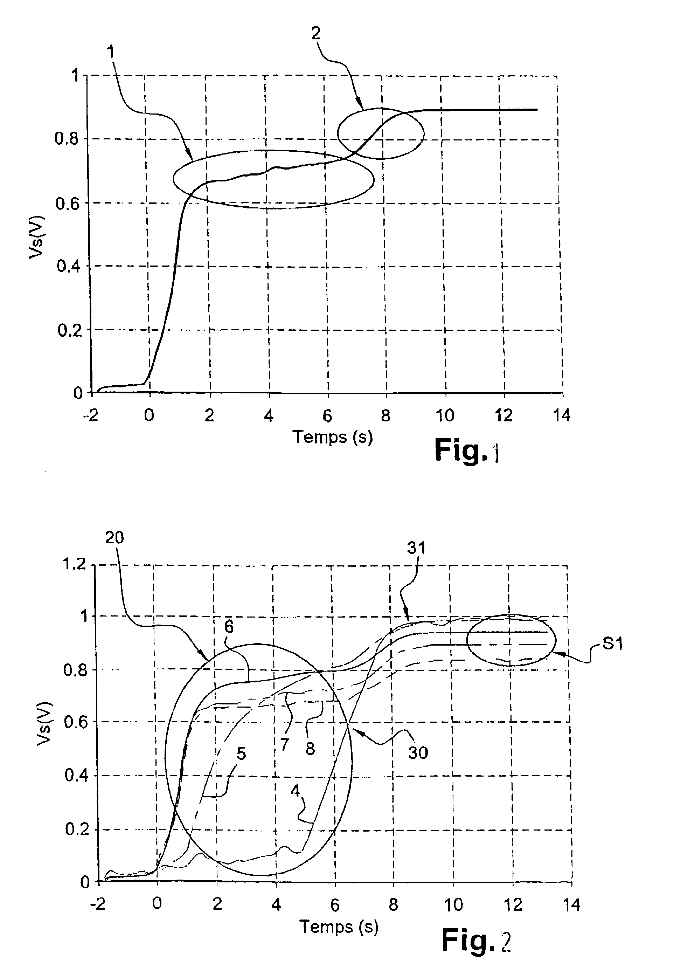

On se rapportera aux dessins annexés dans lesquels : Les figures 1 et 2 montrent les résultats de mesures d'essais en fonction du temps à partir du déclenchement d'une purge. Ces courbes représentent la tension aux bornes de la sonde en fonction du temps.
- la figure 1 est un graphique montrant une courbe représentative du signal de la sonde à oxygène placée en aval du piège à oxydes d'azote, pour une sonde lambda fonctionnant à une température entre environ 650° et 800°C, obtenu par le procédé de la demande FR 2,843,044,
- la figure 2 est un graphique montrant une courbe représentative du signal de la sonde à oxygène placée en aval du piège à oxydes d'azote, pour une sonde lambda fonctionnant à une température entre environ 400°-500°C selon l'invention,
- les figures 3A et 3B représentent le comportement de la sonde à oxygène en fonction de la température du capteur et de la composition chimique des gaz d'échappement, elle-même fonction du vieillissement du piège à oxydes d'azote, ladite sonde étant disposée en aval d'un piège à oxydes d'azote, cette étude de comportement permettant de faire le diagnostic de son état de vieillissement, à haute température (figure 3A) et à basse température (figure 3B).

Les éléments du moteur traversés par les gaz sont par exemple, successivement selon le sens de circulation des gaz :
- l'entrée d'air, en provenance du filtre à air,
- la partie aspiration d'un turbocompresseur,
- le collecteur d'admission,
- le haut de cylindre équipé d'un injecteur,
- les tubulures d'échappement et la partie échappement du turbocompresseur,
- le piège à oxydes d'azote, la ligne d'échappement, équipée d'un filtre à particules.

Une première sonde à oxygène est montée en aval du piège à oxydes d'azote, et une seconde sonde à oxygène est montée en amont du piège à oxydes d'azote, les deux sondes étant reliées à une unité de calcul, elle-même reliée à une unité de pilotage du moteur.

Les sondes sont par exemple des sondes à oxygène tout ou rien.

Sur la figure 1, la courbe est obtenue avec un piège à oxydes d'azote neuf, stabilisé.

Le procédé antérieur, fonctionnant à une température normale d'utilisation (haute température), permet à l'ensemble des réducteurs de réagir avec l'oxygène présent sur l'électrode de la sonde (platine).

Ceci induit une réduction de la pression partielle en oxygène, et donc une augmentation de la force électromotrice de la sonde. Le signal du capteur tend alors à augmenter pour atteindre un pallie de saturation 1, dès lors que la richesse (rapport réducteurs/oxydants) est suffisante (premier plateau 1).

Ce premier plateau 1 correspond à l'augmentation de la richesse (rapport réducteurs/oxydants) nécessaire à la réduction des oxydes d'azote dans le piège à oxydes d'azote. En aval du piège à oxydes d'azote, on trouve principalement du méthane.

Le second saut 2 intervient dès lors que les réducteurs en amont du piège à oxydes d'azote sont moins utilisés pour la réduction des oxydes d'azote adsorbés dans le piège à oxydes d'azote, et du fait de la formation d'hydrogène au sein du piège en fin de purge.

Cette seconde augmentation de la concentration de réducteurs, dont l'hydrogène, en aval du piège correspond à la fin de la purge, et se traduit par une variation du signal électrique du capteur.

Sur la figure 2, les tracés 4 à 8 sont respectivement obtenus pour des températures de la sonde lambda de 400°, 500°, 600°, 700° et 800°C.

On peut voir que pour un même état de vieillissement du piège à oxydes d'azote, mais avec une température basse de fonctionnement du moteur (tracés 4 et 5), les réactions catalytiques sur l'électrode de la sonde sont limitées.

Pour les basses températures (tracés 4 et 5), le premier plateau 20 observé à haute température (tracés 6, 7, 8), n'existe plus. Les réducteurs, tels que le méthane, présents ne réagissent pas avec les oxydants. Ceci induit alors un signal faible.

Au fur et à mesure du traitement des oxydes d'azote stockés dans le piège à oxydes d'azote, le signal électrique de la sonde augmente 30 pour atteindre des niveaux 31 de tensions équivalents au second basculement 2, lorsque la température de la sonde lambda est élevée. Ce simple basculement 30 du signal sonde observé à basse température est en fait équivalent au second basculement 2 obtenu à haute température. Il coïncide à la fin de la purge et, donc à une augmentation de la quantité des réducteurs (hydrogène, CO et hydrocarbures) en aval du pièges à oxydes d'azote

Pour optimiser la détection de la fin de purge, le seuil S1 peut être défini en fonction de la température du capteur, puisque la décroissance de la tension maximale de la sonde est fonction de l'augmentation de la température du capteur.

Un tel procédé de détection de fin de purge peut être utilisé seul ou en combinaison avec le procédé de gestion selon, le document FR 2,843,044.

Lorsque la température du capteur, lors de la purge, est basse, il est préférable de la réaugmenter dès la fin de la purge, afin d'obtenir une température de fonctionnement normale du capteur et d'éviter son encrassement par des suies, et/ou son empoisonnement par des résidus.

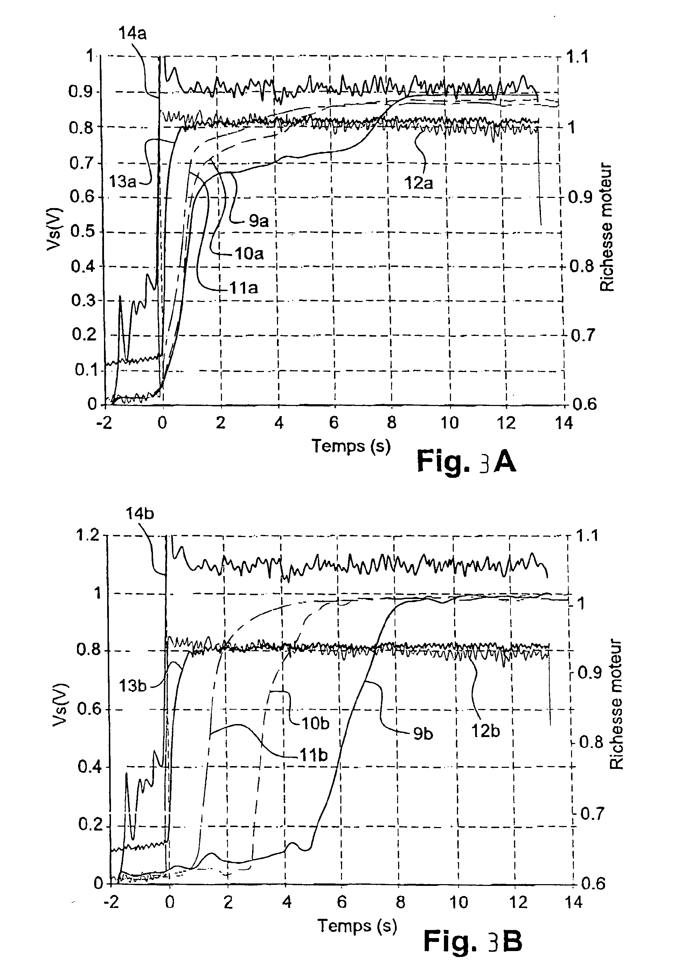

Sur les figures 3A et 3B, en ordonnée, l'échelle de gauche représente la tension aux bornes de la sonde lambda, et l'échelle de droite la valeur du signal richesse fourni une sonde proportionnelle.

Les figures 3A et 3B ont été obtenues respectivement pour des températures de sonde lambda aval de 700°C et 400°C.

Sur les figures 3A et 3B, les tracés 9a et9b représentent respectivement le signal fourni par une sonde à oxygène placée en aval du piège à oxydes d'azote, neuf, stabilisé, obtenu pour une haute et une basse température du capteur(sonde lambda).

Les tracés 10a et 10b représentent respectivement le signal fourni par une sonde à oxygène placée en aval du piège à oxydes d'azote, vieilli, obtenu pour une haute et une basse température de la sonde lambda.

Les tracés 11a et 11b représentent respectivement le signal fourni par une sonde à oxygène placée en aval du piège à oxydes d'azote, dégradé, obtenu à haute et à basse température de la sonde lambda.

Les tracés 12a et 12b représentent respectivement le signal fourni par une sonde à oxygène placée en amont du piège à oxydes d'azote, obtenu pour une température normale de fonctionnement de la sonde.

Les tracés 13a et 13b représentent respectivement le signal fourni par une sonde proportionnelle placée en amont du piège à oxydes d'azote, sans courant de pompage, obtenu pour une température normale de fonctionnement de la sonde.

Les tracés 14a et 14b représentent respectivement le signal richesse fourni par une sonde proportionnelle placée en amont du piège à oxydes d'azote, obtenu pour une température normale de fonctionnement.

De ces tracés, on peut noter que l'évolution du comportement de la sonde à basse et à haute température peut permettre un diagnostic du piège à oxydes d'azote qui consiste à mettre en évidence son état de vieillissement.

Afin d'optimiser ce diagnostic, il est possible d'intégrer le signal électrique mesuré, entre l'instant où la purge est déclenchée, jusqu'à l'instant correspondant à la fin de la purge, c'est-à-dire jusqu'au niveau du second basculement pour des températures élevées, ou bien d'un niveau de tension prédéfini pour des basses températures.

A basse comme à haute température, l'intégration mathématique du signal est de préférence supérieure à une valeur prédéterminée (encore appelé seuil S2) pour constater le bon fonctionnement du piège à oxyde d'azote.

Cette comparaison de la valeur d'intégration est effectuée sur un point de fonctionnement du moteur connu, tel que par exemple lors d'une phase de purge avec une richesse du moteur d'environ 1,05.

Selon une autre variante pour réaliser le diagnostic du piège à oxydes d'azote, il est possible de mesurer le temps nécessaire pour atteindre le second saut à haute température, ou le seuil prédéterminé à basse température, en prenant comme référence l'instant qui correspond à l'enrichissement des gaz d'échappement indiquant le début de la purge.

Ce temps mesuré correspond en fait au temps nécessaire pour purger les oxydes d'azote du piège.

De ces mesures, il apparaît clairement que ce temps de purge diminue d'autant plus que le piège à oxyde d'azote a vieilli.

Le diagnostic de l'état de vieillissement du piège à oxydes d'azote est donc effectué en comparant ce temps mesuré à une valeur prédéfinie.

Si ce temps mesuré, dans des conditions de fonctionnement de moteur définies, telles celles de la richesse du moteur, devient inférieur au seuil prédéfini, alors il est possible de diagnostiquer le piège à oxydes d'azote comme défaillant.

Selon une dernière variante, ce diagnostic peut être effectué par rapport à une seconde sonde de même nature que celle qui effectue les mesures (sonde à oxygène) ou de nature différente (sonde de « richesse » ampérométrique ou capteur « d'oxydes d'azote » ampérométrique).

Pour des capteurs ampérométriques, il est possible d'utiliser, soit le signal « richesse » délivré, soit le signal de la cellule de référence en imposant un courant de pompage nul pour disposer d'une sonde à oxygène de type tout ou rien.

Cette seconde sonde, alors placée en amont du piège à oxydes d'azote, est utilisée comme référence.

Si la différence de comportement entre ces sondes amont et aval devient trop faible, alors il est possible de diagnostiquer un mauvais fonctionnement du piège à oxydes d'azote.

Le piège sera diagnostiqué comme défaillant lorsque la différence de comportement est inférieure à un seuil prédéfini.

Le dispositif destiné à mettre en oeuvre le procédé de l'invention fonctionne de la manière suivante.

On règle, ou bien, on pilote la température de la sonde à oxygène avec la tension de chauffage pour obtenir une basse température (environ 400°-500°C) afin d'éviter les réactions catalytiques du méthane principalement lors de la phase utile de la purge des oxydes d'azote.

Le diagnostic du piège à oxydes d'azote et la détection de la fin de purge sont ainsi facilités. Ils sont moins sensibles à l'évolution du comportement du capteur du fait de son vieillissement, et aussi moins sensibles aux formulations catalytiques.

On peut procéder de la même manière pour des températures élevées.

## Revendications

1. Procédé pour gérer le fonctionnement d'un piège à oxydes d'azote, et pour diagnostiquer son état de vieillissement pour un moteur à combustion interne fonctionnant en mélange pauvre, selon lequel on commande périodiquement une purge dudit piège à oxydes d'azote, consistant à disposer une première sonde à oxygène sur le conduit d'échappement en aval du piège à oxydes d'azote, et à observer l'évolution d'un signal significatif représentatif du signal fourni par cette sonde, **caractérisé en ce qu'**une unique augmentation sensible de ce signal représentatif vers une valeur seuil S1 à compter du début de la purge du piège à oxydes d'azote, obtenue suite à une variation consécutive à un passage du moteur à un fonctionnement en mélange pauvre à un fonctionnement en mélange riche, étant utilisée comme indicateur pour commander la fin de la purge, et **en ce que** l'intégration du signal significatif entre l'instant de début de purge et l'instant de fin de purge, puis, la comparaison de la valeur d'intégration à une valeur seuil S2, ou bien la mesure du temps écoulé pour atteindre le seuil S1 par rapport à l'instant de début de purge sont utilisées pour diagnostiquer son état de vieillissement.

2. Procédé selon la revendication 1, **caractérisé en ce que** la gestion du fonctionnement est effectuée lorsque la sonde à oxygène lambda fonctionne à une température comprise entre 400° et 500°C.

3. Procédé selon la revendication 1, **caractérisé en ce que** le diagnostic est effectué lorsque la sonde à oxygène lambda fonctionne à une température allant d'environ 400° à 500°C, ou bien d'environ 650° à 800°C.

4. Procédé selon la revendication 1, **caractérisé en ce qu'**avant ou après l'observation de l'unique signal, un nouveau signal comprenant une nouvelle augmentation sensible formant un second plateau à partir d'un premier plateau de niveau sensiblement constant, obtenu suite à une variation consécutive à un passage du moteur d'un fonctionnement en mélange pauvre à un fonctionnement en mélange riche est utilisée comme indicateur complémentaire pour commander la fin de purge lorsque la sonde à oxygène lambda fonctionne à une température comprise entre environ 650° et 800°C.

5. Procédé selon la revendication 4, **caractérisé en ce que** la mesure du temps écoulé entre les premier et second plateau est utilisée pour préciser son état de vieillissement lorsque la sonde à oxygène lambda fonctionne à une température comprise entre environ 650° et 800°C.

6. Procédé selon la revendication 1, **caractérisé en ce qu'**on utilise en complément, une seconde sonde à oxygène placée en amont du piège à oxydes d'azote, pour fournir un signal de référence par rapport auquel l'évolution du signal fourni par la première sonde est comparée pour fournir ledit signal significatif.

7. Procédé selon l'une des revendications 1 ou 6, **caractérisé en ce que** la ou les sondes à oxygènes sont choisies parmi les sondes de type suivant : sonde à oxygène de type tout ou rien, sonde proportionnelle, capteur d'oxyde d'azote dont on utilise la fonction de mesure de la concentration en oxygène.

8. Dispositif de gestion du fonctionnement d'un piège à oxydes d'azote et de diagnostic de son état de vieillissement pour un moteur à combustion interne fonctionnant en mélange pauvre, pour la mise en oeuvre du procédé selon l'une des revendications précédentes, le moteur étant équipé d'une ligne d'échappement pourvus d'un piège à oxydes d'azote, **caractérisé en ce qu'**il comporte une sonde à oxygène placée sur la ligne d'échappement en aval du piège à oxydes d'azote, et des moyens de calcul pour déterminer l'unique augmentation sensible d'un signal significatif représentatif du signal fourni par ladite sonde à partir du début de la purge, ledit signal étant obtenu suite au déclenchement d'une opération de purge, pour s'en servir comme indicateur de fin de purge, et pour déterminer l'état de vieillissement du piège à oxydes d'azote.

9. Dispositif selon la revendication 8, **caractérisé en ce qu'**il comprend une seconde sonde à oxygène placée en amont du piège à oxydes d'azote et reliée auxdits moyens de calculs pour leur fournir un signal de référence.

## Claims

1. Method for managing the operation of a nitrogen oxide trap, and for diagnosing its aging condition for an internal combustion engine operating with a lean mixture, whereby a bleed of said nitrogen oxide trap is periodically carried out, consisting in placing a first oxygen probe on the exhaust line downstream of the nitrogen oxide trap, and in observing the change in a significant signal representative of the signal delivered by this probe, **characterized in that** a unique substantial increase of this representative signal toward a threshold value S1 from the start of the bleed of the nitrogen oxide trap, obtained after a variation subsequent to a transition of the engine from lean mixture operation to rich mixture operation, is used as an indicator to order the end of the bleed, and **in that** the integration of the significant signal over the time from the start of the bleed to the end of the bleed, then, the comparison of the integration value with a threshold value S2, or the measurement of the time elapsed to reach the threshold S1 from the starting time of the bleed, are used to diagnose its aging condition.

2. Method according to Claim 1, **characterized in that** the management of the operation is carried out when the lambda oxygen probe operates at a temperature of between 400° and 500°C.

3. Method according to Claim 1, **characterized in that** the diagnosis is made when the lambda oxygen probe operates at a temperature of between about 400° and 500°C, or between about 650° and 800°C.

4. Method according to Claim 1, **characterized in that** before or after the observation of the unique signal, a new signal comprising a new substantial increase forming a second plateau from a first plateau having a substantially constant level, obtained after a variation subsequent to a transition of the engine from lean mixture operation to rich mixture operation, is used as a supplementary indicator to order the end of the bleed when the lambda oxygen probe operates at a temperature of between about 650° and 800°C.

5. Method according to Claim 4, **characterized in that** the measurement of the time elapsed between the first and second plateaus is used to identify its aging condition when the lambda oxygen probe operates at a temperature of between about 650° and 800°C.

6. Method according to Claim 1, **characterized in that** complementary use is made of a second oxygen probe placed upstream of the nitrogen oxide trap, to deliver a reference signal against which the change in the signal delivered by the first probe is compared to provide said significant signal.

7. Method according to either of Claims 1 and 6, **characterized in that** the oxygen probe(s) is/are selected from probes of the following type: oxygen probe of the on/off type, proportional probe, nitrogen oxide sensor whereof the oxygen concentration measurement function is used.

8. Device for managing the operation of a nitrogen oxide trap and for diagnosing its aging condition for an internal combustion engine operating with a lean mixture, for implementing the method according to one of the preceding claims, the engine being equipped with an exhaust line provided with a nitrogen oxide trap, **characterized in that** it comprises an oxygen probe placed on the exhaust line downstream of the nitrogen oxide trap, and computation means for determining the unique substantial increase of a significant signal representative of the signal delivered by said probe from the start of the bleed, said signal being obtained after the initiation of a bleed operation, for use as indicator of the end of the bleed, and for determining the aging condition of the nitrogen oxide trap.

9. Device according to Claim 8, **characterized in that** it comprises a second oxygen probe placed upstream of the nitrogen oxide trap and connected to said computation means for sending them a reference signal.

## Patentansprüche

1. Verfahren zur Verwaltung des Betriebs einer Stickoxidfalle und zur Diagnose ihres Alterungszustands für einen mit magerem Gemisch arbeitenden Verbrennungsmotor, gemäß dem periodisch eine Entleerung der Stickoxidfalle gesteuert wird, die darin besteht, eine erste Sauerstoffsonde auf der Abgasleitung hinter der Stickoxidfalle anzuordnen und die Entwicklung eines signifikanten Signals zu beobachten, das für das von dieser Sonde gelieferte Signal repräsentativ ist, **dadurch gekennzeichnet, dass** eine einzige deutliche Erhöhung dieses repräsentativen Signals auf einen Schwellwert S1 ab dem Beginn der Entleerung der Stickoxidfalle, die nach einer Veränderung aufgrund eines Übergangs des Motors von einem Betrieb mit magerem Gemisch auf einen Betrieb mit fettem Gemisch erhalten wird, als Anzeige verwendet wird, um das Ende der Entleerung zu steuern, und dass die Integration des signifikanten Signals zwischen den Zeitpunkt des Beginns der Entleerung und den Zeitpunkt des Endes der Entleerung, dann der Vergleich des Integrationswerts mit einem Schwellwert S2, oder auch die Messung der Zeit, die vergangen ist, um den Schwellwert S1 zu erreichen, im Verhältnis zum Zeitpunkt des Beginns der Entleerung, verwendet werden, um ihren Alterungszustand zu diagnostizieren.

2. Verfahren nach Anspruch 1, **dadurch gekennzeichnet, dass** die Verwaltung des Betriebs durchgeführt wird, wenn die Sauerstoff-Lambdasonde bei einer Temperatur zwischen 400° und 500°C arbeitet.

3. Verfahren nach Anspruch 1, **dadurch gekennzeichnet, dass** die Diagnose durchgeführt wird, wenn die Sauerstoff-Lambdasonde bei einer Temperatur zwischen etwa 400° und 500°C oder aber zwischen etwa 650° und 800°C arbeitet.

4. Verfahren nach Anspruch 1, **dadurch gekennzeichnet, dass** vor oder nach der Beobachtung des einzigen Signals ein neues Signal, das eine neue deutliche Erhöhung aufweist, die ein zweites Plateau ausgehend von einem ersten Plateau mit im Wesentlichen konstanten Pegel bildet, erhalten nach einer Veränderung aufgrund eines Übergangs des Motors von einem Betrieb mit magerem Gemisch zu einem Betrieb mit fettem Gemisch, als komplementäre Anzeige verwendet wird, um das Entleerungsende zu steuern, wenn die Sauerstoff-Lambdasonde bei einer Temperatur zwischen etwa 650°C und 800°C arbeitet.

5. Verfahren nach Anspruch 4, **dadurch gekennzeichnet, dass** die Messung der Zeit, die zwischen dem ersten und dem zweiten Plateau vergangen ist, verwendet wird, um ihren Alterungszustand zu präzisieren, wenn die Sauerstoff-Lambdasonde bei einer Temperatur zwischen etwa 650°C und 800°C arbeitet.

6. Verfahren nach Anspruch 1, **dadurch gekennzeichnet, dass** als Ergänzung eine zweite Sauerstoffsonde verwendet wird, die vor der Stickoxidfalle angeordnet ist, um ein Bezugssignal zu liefern, mit dem die Entwicklung des Signals verglichen wird, das von der ersten Sonde geliefert wird, um das signifikante Signal zu liefern.

7. Verfahren nach einem der Ansprüche 1 oder 6, **dadurch gekennzeichnet, dass** die Sauerstoffsonde(n) aus den Sonden der folgenden Typen ausgewählt werden: Sauerstoffsonde vom Typ Ein-Aus, Proportionalsonde, Stickoxidsensor, von dem die Messfunktion der Sauerstoffkonzentration verwendet wird.

8. Vorrichtung zur Verwaltung des Betriebs einer Stickoxidfalle und zur Diagnose ihres Alterungszustands für einen mit magerem Gemisch arbeitenden Verbrennungsmotor, zur Anwendung des Verfahrens nach einem der vorhergehenden Ansprüche, wobei der Motor mit einer Auspuffanlage ausgestattet ist, die mit einer Stickoxidfalle versehen ist, **dadurch gekennzeichnet, dass** sie eine Sauerstoffsonde, die auf der Auspuffanlage hinter der Stickoxidfalle angeordnet ist, und Rechenmittel aufweist, um die einzige deutliche Erhöhung eines signifikanten Signals zu bestimmen, das für das Signal repräsentativ ist, das von der Sonde ausgehend vom Beginn der Entleerung geliefert wird, wobei das Signal nach dem Auslösen eines Entleerungsvorgangs erhalten wird, um es als Anzeige des Entleerungsendes zu nutzen und um den Alterungszustand der Stickoxidfalle zu bestimmen.

9. Vorrichtung nach Anspruch 8, **dadurch gekennzeichnet, dass** sie eine zweite Sauerstoffsonde aufweist, die vor der Stickoxidfalle angeordnet und mit den Rechenmitteln verbunden ist, um ihnen ein Bezugssignal zu liefern.
